# FASCICULE DE BREVET EUROPEEN

(11) **EP 2 028 375 B1**
(45) Date de publication et mention de la délivrance du brevet: **03.10.2018**
(21) Numéro de dépôt: 08162357.1
(22) Date de dépôt: 14.08.2008
(51) Int. Cl.: F04D 29/66, F01D 5/02, F02C 7/04

(54) **Soufflante pour turbomachine d'aéronef comprenant une bride d'équilibrage masquée par le cône d'entrée**
Nasenhaube für eine Turbomaschine mit integrierter Auswuchtvorrichtung
Nose cone for an airplane turbine engine with integrated balancing ring

(30) Priorité: 24.08.2007 FR 0757167
(43) Date de publication de la demande: 25.02.2009
(73) Titulaire: Safran Aircraft Engines, 75015 Paris (FR)
(72) Inventeur: Belmonte, Olivier, 77176 Savigny le Temple (FR); Goga, Jean-Luc, Christian, Yvon, 77430 Champagne sur Seine (FR)
(74) Mandataire: Ilgart, Jean-Christophe

(56) Documents cités:
- WO-A-02/20349
- US-A1- 2005 231 052

## Description

### DOMAINE TECHNIQUE

La présente invention se rapporte de façon générale à une soufflante pour turbomachine. Plus particulièrement, elle concerne le système d'équilibrage équipant la soufflante, permettant l'équilibrage final de la turbomachine.

L'invention s'applique de préférence à un turboréacteur pour aéronef.

### ETAT DE LA TECHNIQUE ANTERIEURE

De l'art antérieur, il est effectivement connu d'équiper la soufflante d'un turboréacteur avec une bride annulaire d'équilibrage portant des masses judicieusement positionnées, afin de réaliser l'équilibrage final du turboréacteur.

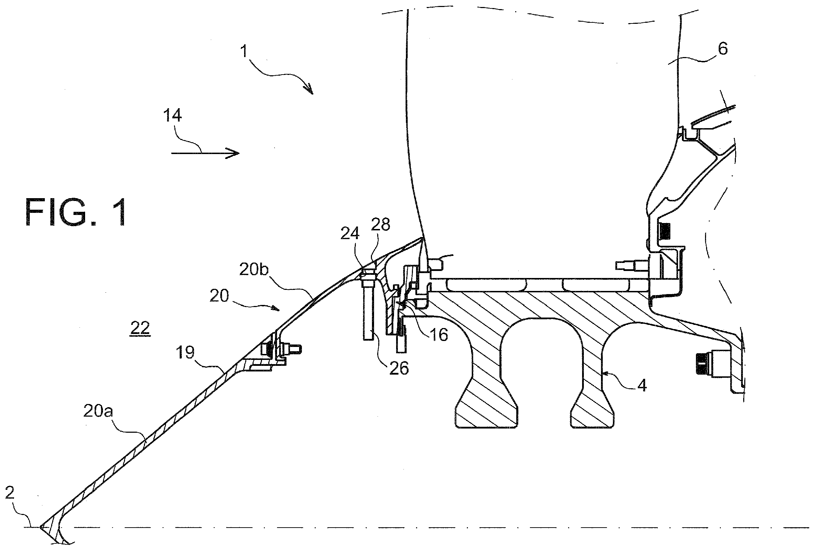

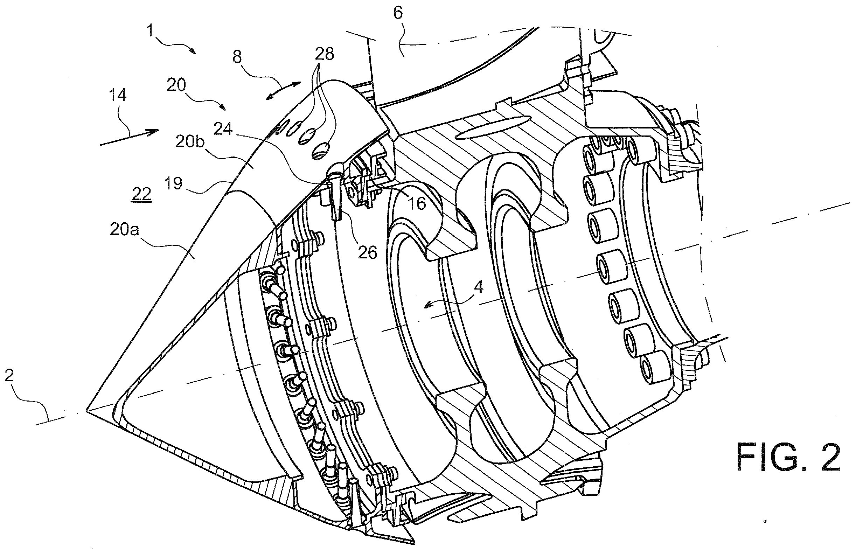

En référence aux figures 1 et 2, il est représenté une réalisation classique et connue de l'art antérieur.

Sur ces figures, on peut donc voir une soufflante 1 d'axe longitudinal ou de rotation 2, correspondant également à l'axe longitudinal du turboréacteur associé. Cette soufflante comprend un disque de soufflante 4 centré sur l'axe 2, des aubes de soufflante 6 rapportées sur le disque 4 et espacées les unes des autres selon une direction circonférentielle ou tangentielle, schématisée par la double-flèche 8.

De cette façon, les aubes 6 sont entraînées en rotation avec le disque 4, autour de l'axe de rotation 2. Elle comprend en outre, de façon connue, des secteurs formant plateforme (non représentés) rapportés fixement sur le disque 4, entre deux aubes 6 directement consécutives dans la direction circonférentielle 8, ces secteurs définissant partiellement une surface inter-aubes destinée à être épousée par un flux annulaire d'air traversant la soufflante, également dénommé veine du turboréacteur. La direction de ce flux ou de cette veine 22, correspondant globalement à la direction principale d'écoulement des gaz au sein du turboréacteur, est représentée par la flèche 14, et est également assimilable à une direction axiale de la soufflante 1.

Par ailleurs, la soufflante 1 est également équipée d'un dispositif annulaire de rétention d'aubes 16, permettant la rétention des aubes 6 dans la direction axiale 14, vers l'amont. A cet égard, il est noté que dans toute la description, les termes « amont » et « aval » sont à considérer selon la direction principale d'écoulement 14 des gaz au sein du turboréacteur.

En amont des aubes de soufflante 6, la soufflante 1 présente un cône d'entrée 20 centré sur l'axe 2, et dont la surface extérieure 19 sensiblement conique est destinée à être épousée par la veine 22 précitée. Ce cône 20, entraîné en rotation selon l'axe 2 avec le disque de soufflante 4, peut être réalisé en une ou plusieurs parties adjacentes, par exemple une partie amont 20a issue du sommet du cône, et une partie aval 20b adjacente aux aubes de soufflante, comme visible sur les figures 1 et 2.

La partie aval 20b, également dénommée virole arrière de capot, peut, outre sa fonction de définition d'une partie de la surface extérieure 19 de délimitation de la veine 22, également intégrer une fonction additionnelle de système d'équilibrage du turboréacteur.

En effet, cette partie aval 20b forme une bride annulaire d'équilibrage couplée en rotation avec le disque de soufflante 4 selon l'axe de rotation 2, équipée d'une pluralité de trous de fixation de masse 24 espacés circonférentiellement les uns des autres. A titre d'exemple indicatif, ce sont par exemple trente-six trous traversants 24 qui sont prévus sur la bride d'équilibrage 20b. Comme cela est visible sur les figures 1 et 2, dans les réalisations de l'art antérieur, les trous de fixation de masse 24 débouchent donc au niveau de leur extrémité radiale externe dans la veine 22.

En fonctionnement, les trous 24 logent chacun une masse d'équilibrage 26 en forme de vis, dont les dimensions sont retenues de manière à ce que les masses associées permettent un équilibrage optimal du turboréacteur, compensant le balourd résiduel. Ainsi, de façon connue de l'homme du métier, c'est la longueur de tige des vis qui est adaptée en fonction de la masse désirée, ces vis étant logées dans leurs trous associés avec la tête de vis orientée radialement vers l'extérieur.

Néanmoins, si cette configuration permet d'obtenir un équilibrage optimal du turboréacteur, elle n'est pas sans présenter d'inconvénient. En premier lieu, il est indiqué que la nature traversante de trous 24, impliquant qu'ils débouchent dans la veine 22, nécessite que chacun de ces trous soit obturé par une vis d'équilibrage 26, afin d'éviter des fuites de la veine en direction de l'intérieur du cône d'entrée 20. Par conséquent, le nombre important de vis d'équilibrage 26 qui découle de cette contrainte, par exemple trente-six, est extrêmement pénalisant en termes de masse.

De plus, même lorsque les vis 26 sont mises en place, la surface extérieure 19 de définition de la veine 22 ne présente pas un profil aérodynamique parfait, étant donné que des creux 28 subsistent au niveau de l'extrémité radiale externe des trous de fixation de masse, comme cela est clairement visible sur les figures 1 et 2. Ces creux 28, dont les fonds sont constitués par les têtes de vis associées, proviennent essentiellement de l'agencement dans la direction radiale des vis, combiné à la nature sensiblement conique de la surface 19. Avec ce profil aérodynamique pénalisé par les creux 28, l'écoulement d'air sur le cône d'entrée n'est clairement pas optimisé. Il en résulte de la traînée, et par conséquent des pertes de performances de la turbomachine.

Pour faire face à cet inconvénient, il a été proposé, tel que cela ressort notamment du document US 2005/0231052, de faire en sorte que la bride annulaire d'équilibrage soit agencée à l'intérieur du cône d'entrée, de manière à ce que ses trous de fixation de masse soient isolés de la veine de la turbomachine.

Néanmoins, cette configuration ne se révèle pas entièrement optimisée, en particulier en raison du fort encombrement dans cette zone.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet une soufflante pour turbomachine d'aéronef, comprenant un cône d'entrée de turbomachine présentant une surface extérieure destinée à être épousée par une veine de la turbomachine, un disque de soufflante ainsi que des aubes de soufflante montées sur ledit disque avec lequel elles tournent selon un axe de rotation de la soufflante, ladite soufflante comprenant une bride annulaire d'équilibrage couplée en rotation avec le disque de soufflante selon ledit axe de rotation, et équipée d'une pluralité de trous de fixation de masse espacés circonférentiellement les uns des autres, ladite soufflante comprenant également une ou plusieurs masses d'équilibrage montées fixement sur ladite bride annulaire d'équilibrage par l'intermédiaire de l'un ou de plusieurs desdits trous de fixation de masse. De plus, ladite bride annulaire d'équilibrage est agencée à l'intérieur dudit cône d'entrée de manière à ce que ses trous de fixation de masse soient isolés de ladite veine de la turbomachine. Selon l'invention, la soufflante comporte en outre un anneau de rétention des aubes de soufflante permettant de retenir axialement ces aubes par rapport audit disque de soufflante, ledit anneau de rétention et ladite bride annulaire d'équilibrage étant réalisés d'une seule pièce.

Ainsi, l'invention proposée permet avantageusement de diminuer l'encombrement et la masse globale, puisque des mêmes moyens de fixation permettent d'assurer l'implantation de l'anneau de rétention et de la bride annulaire d'équilibrage réalisés d'une seule pièce.

De plus, dans ce cas, l'anneau peut éventuellement être conçu pour former une partie aval dudit cône d'entrée. Une alternative consiste bien entendu à prévoir que la pièce unique formant l'anneau et la bride soit située entièrement à l'intérieur du cône, donc masquée par celui-ci de la veine de la turbomachine.

Par ailleurs, dans la soufflante selon l'invention, les trous de fixation de masse d'équilibrage ne débouchent plus dans la veine de la turbomachine, puisque la bride annulaire d'équilibrage portant ces trous est entourée par le cône d'entrée définissant la veine. En d'autres termes, le cône se situe radialement extérieurement par rapport aux trous de fixation de masse, ces derniers étant donc masqués vis-à-vis de la veine par la surface extérieure du cône.

Ainsi, le fait que les trous de fixation de masse soient masqués par le cône d'entrée, et non plus prévus sur celui-ci, implique avantageusement que la surface extérieure de définition de la veine ne présente plus les creux de logement de masse décrits précédemment en relation avec les réalisations de l'art antérieur. L'écoulement d'air sur le cône d'entrée est donc optimisé, ce qui engendre globalement une diminution de la traînée, et par conséquent une augmentation des performances de la turbomachine.

De plus, le fait de prévoir des trous de fixation de masse non-débouchants dans la veine implique qu'il n'est plus nécessaire de loger une masse dans chaque trou. Par conséquent, il est possible, même préféré, d'aboutir à un équilibrage prévoyant la mise en place de masses seulement dans certains des trous prévus à cet effet, conduisant ainsi avantageusement à une réduction sensible de la masse du système d'équilibrage, et de la soufflante intégrant ce système.

A cet égard, il est de préférence prévu qu'en fonctionnement, au moins un desdits trous de fixation de masse, et encore plus préférentiellement une pluralité de ces mêmes trous, sont laissés libres.

De manière préférentielle, ladite bride annulaire d'équilibrage est rapportée fixement sur ledit disque de soufflante, même si elle pourrait être rapportée sur tout autre élément du bloc tournant de la soufflante, sans sortir du cadre de l'invention.

Il est noté que ledit cône d'entrée s'étend vers l'aval jusqu'auxdites aubes de soufflante, en une ou plusieurs pièces. Par exemple, il est possible de fabriquer le cône d'entrée en une partie amont issue du sommet du cône et une partie aval adjacente aux aubes de soufflante, l'intérêt résidant alors dans la possibilité d'optimiser indépendamment ces parties, par exemple en fonction des niveaux de sollicitations mécaniques/thermiques susceptibles d'être rencontrés par celles-ci.

Enfin, l'invention a également pour objet une turbomachine pour aéronef comprenant une soufflante telle que décrite ci-dessus, ladite turbomachine étant préférentiellement un turboréacteur.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1, déjà décrite, représente une vue en coupe longitudinale d'une partie de soufflante pour turboréacteur selon une réalisation classique et connue de l'art antérieur ;
- la figure 2, déjà décrite, représente une vue partielle en perspective de la soufflante montrée sur la figure 1 ;
- la figure 3 représente une vue en coupe longitudinale d'une partie de soufflante pour turboréacteur, selon un mode de réalisation préféré de la présente invention ;
- la figure 4 représente une vue partielle en perspective du système d'équilibrage équipant la soufflante montrée sur la figure 3 ; et
- la figure 5 représente une vue en perspective d'une partie de soufflante pour turboréacteur, selon un autre mode de réalisation préféré de la présente invention.

### EXPOSÉ DÉTAILLÉ DE MODES DE RÉALISATION PRÉFÉRÉS

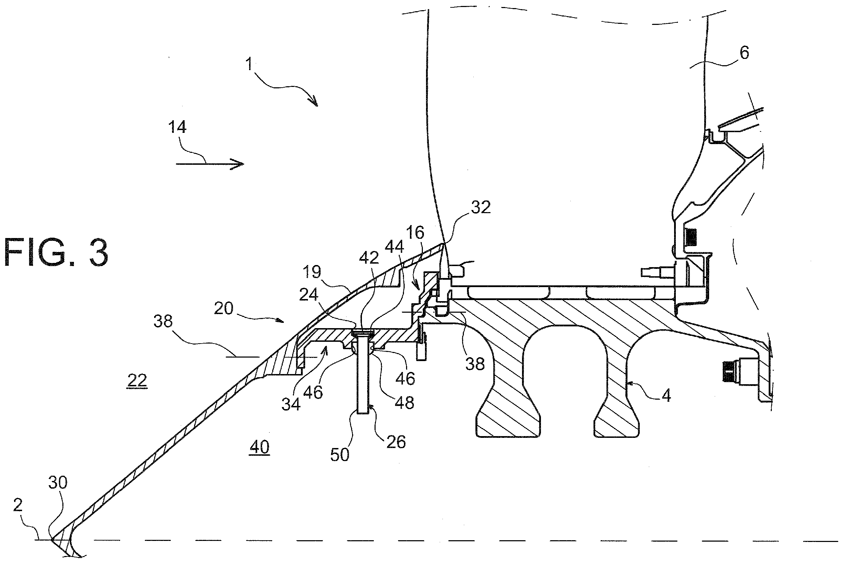

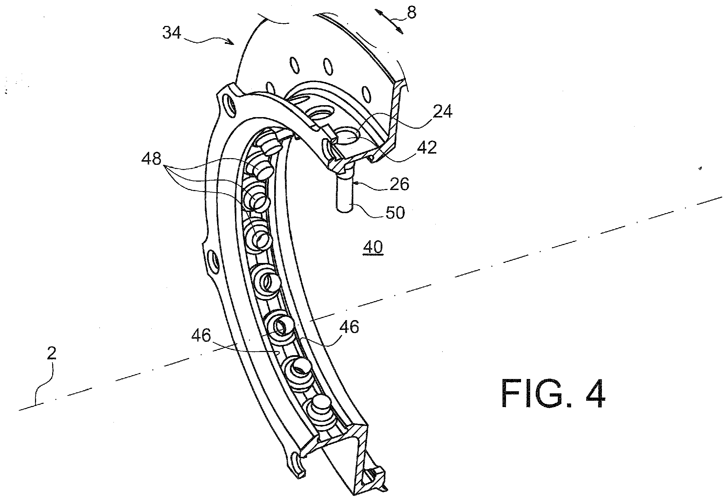

En référence tout d'abord aux figures 3 et 4, on peut apercevoir une partie d'une soufflante 1 pour turboréacteur d'aéronef, selon un mode de réalisation préféré de la présente invention.

Cette soufflante présente des similitudes avec celles décrites en référence aux figures 1 et 2 illustrant l'art antérieur. A cet égard, sur les figures, les éléments portant les mêmes références numériques correspondent à des éléments identiques ou similaires.

Ainsi, on peut s'apercevoir que la soufflante 1 selon le mode de réalisation préféré de l'invention présente un disque de soufflante 4 et des aubes de soufflante 6, solidaires en rotation autour de l'axe longitudinal 2.

En amont de ces éléments, le cône d'entrée 20 est ici réalisé d'une seule pièce entre son sommet 30 et son bord opposé 32, affleurant les aubes 6 jusqu'auxquelles il s'étend. La surface extérieure 19 de ce cône, délimitant la veine 22, s'étend donc elle aussi de façon continue jusqu'aux aubes de soufflante.

L'une des particularités de l'invention réside dans le fait que le système d'équilibrage équipant la soufflante, destiné à assurer l'équilibrage final du turboréacteur, est agencé à l'intérieur du cône 20, de manière à être masqué de la veine 22.

Plus précisément, le système présente une bride annulaire d'équilibrage 34 située à l'intérieur du cône, cette bride 34 agencée radialement vers l'intérieur par rapport à ce dernier pouvant être montées fixement par boulons ou équivalents au disque 4 dans sa partie aval, et à une face intérieure du cône dans sa partie amont, comme l'illustrent schématiquement les traits pointillés 38 sur la figure 3.

Ce positionnement spécifique est retenu de sorte que les trous de fixation de masse 24 pratiqués sur la bride 34 soient isolés de la veine 22, à savoir non-débouchants dans celle-ci, ou encore masquée de celle-ci. En effet, les trous de fixation de masse 24, espacés circonférentiellement les uns des autres sur la bride, et de préférence chacun orienté selon une direction radiale de la soufflante, débouchent radialement vers l'intérieur et vers l'extérieur dans un espace intérieur 40 du cône 20, mais ne communiquent plus avec la veine 22 comme cela était le cas antérieurement.

Une ou plusieurs masses d'équilibrage 26 sont montées sur la bride 34 par l'intermédiaire des trous, en fonction de l'équilibrage requis. L'un des avantages de la présente invention réside dans la possibilité, qui est d'ailleurs préférentiellement retenue, d'établir un équilibrage final du turboréacteur en laissant libres un ou plusieurs trous 24, afin d'obtenir un gain de masse. Dans un tel cas, l'absence d'obturation des trous ne logeant aucune masse ne génère pas de problème de fuite au niveau de la veine 22, étant donné que ces trous restent isolés de celle-ci, en particulier grâce à la surface extérieure 19 décalée radialement vers l'extérieur.

Les masses d'équilibrage 26 peuvent prendre toute forme connue de l'homme du métier. A titre d'exemple illustratif représenté sur les figures 3 et 4, chaque masse 26 peut prendre la forme d'une vis orientée radialement, dont la tête 42 est orientée vers l'extérieur, en appui interne contre un épaulement 44 prévu au sein de son trou associé 24, traversant radialement la bride 34. La portion interne de la bride présente deux flancs circonférentiels 46 en regard, entre lesquels sont agencés des écrous 48 assurant le serrage des vis 26, chacun des écrous se trouvant dans le prolongement radial interne de son trou 24 associé. Le logement des écrous 48 entre les flancs 46 permet d'interdire leur rotation durant le vissage, grâce à la présence de méplats coopérant avec ces mêmes flancs.

Chaque vis d'équilibrage 26 présente également une tige 50 s'étendant radialement vers l'intérieur à partir de l'écrou 48, la longueur de cette tige étant retenue en fonction de la masse désirée à l'endroit donné, pour un équilibrage final optimisé.

L'une des particularités de la présente invention réside dans le fait que l'anneau 16 de rétention des aubes de soufflante, permettant de retenir axialement ces aubes 6 par rapport au disque de soufflante 4, est réalisé d'un seul tenant avec la bride annulaire d'équilibrage 34. Ainsi, ces deux éléments 16, 34 peuvent partager les mêmes moyens de fixation 38 sur le bloc tournant de soufflante.

Comme montré sur la figure 3, on peut faire en sorte que le cône 20 masque également l'anneau 16 de rétention des aubes de soufflante.

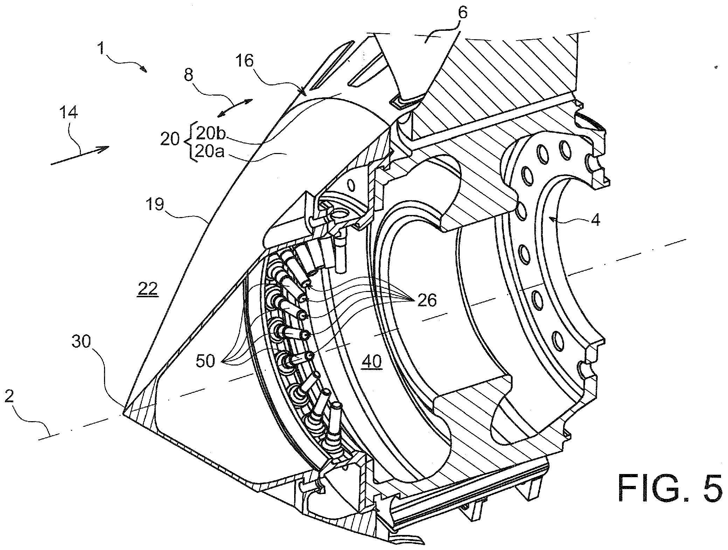

Cependant, une solution alternative est envisageable, comme le montre le mode de réalisation préféré représenté sur la figure 5. Sur cette figure, on peut voir que l'anneau de rétention d'aube 16 forme la partie aval 20b du cône 20 réalisé en deux parties adjacentes 20a, 20b, de sorte qu'il contribue donc également à définir en partie la surface extérieure 19 épousée par la veine 22. Naturellement, l'anneau 16 est ici aussi réalisé d'un seul tenant avec la bride 34.

Bien entendu, diverses modifications peuvent être apportées par l'homme du métier à l'invention qui vient d'être décrite, uniquement à titre d'exemples non limitatifs, l'invention étant définie par les revendications attachées.

## Revendications

1. Soufflante (1) pour turbomachine d'aéronef, comprenant un cône d'entrée (20) de turbomachine présentant une surface extérieure (19) destinée à être épousée par une veine (22) de la turbomachine, un disque de soufflante (4) ainsi que des aubes de soufflante (6) montées sur ledit disque avec lequel elles tournent selon un axe de rotation (2) de la soufflante, ladite soufflante comprenant une bride annulaire d'équilibrage (34) couplée en rotation avec le disque de soufflante (4) selon ledit axe de rotation (2), et équipée d'une pluralité de trous de fixation de masse (24) espacés circonférentiellement les uns des autres, ladite soufflante comprenant également une ou plusieurs masses d'équilibrage (26) montées fixement sur ladite bride annulaire d'équilibrage (34) par l'intermédiaire de l'un ou de plusieurs desdits trous de fixation de masse (24), ladite bride annulaire d'équilibrage (34) était agencée à l'intérieur dudit cône d'entrée (20), de manière à ce que ses trous de fixation de masse (24) soient isolés de ladite veine (22) de la turbomachine,
**caractérisée en ce qu'**elle comporte en outre un anneau de rétention des aubes de soufflante (16) permettant de retenir axialement ces aubes (6) par rapport audit disque de soufflante (4), ledit anneau de rétention (16) et ladite bride annulaire d'équilibrage (34) étant réalisés d'une seule pièce.

2. Soufflante selon la revendication 1, **caractérisée en ce qu'**en fonctionnement, au moins un desdits trous de fixation de masse (24) est laissé libre.

3. Soufflante selon la revendication 1 ou la revendication 2, **caractérisée en ce que** ladite bride annulaire d'équilibrage (34) est rapportée fixement sur ledit disque de soufflante (4).

4. Soufflante selon l'une quelconque des revendications précédentes, **caractérisée en ce que** ledit cône d'entrée (20) s'étend vers l'aval jusqu'auxdites aubes de soufflante (6).

5. Turbomachine pour aéronef comprenant une soufflante (1) selon l'une quelconque des revendications précédentes.

6. Turbomachine pour aéronef selon la revendication 5, **caractérisée en ce qu'**elle est un turboréacteur.

## Patentansprüche

1. Gebläse (1) für Flugzeug-Turbotriebwerke, das einen Eintrittskonus (20) für Turbotriebwerke umfasst, welcher eine Außenfläche (19) aufweist, die dazu vorgesehen ist, dass sich eine Strömungsbahn (22) des Turbotriebwerks an sie anlegt, das ferner eine Gebläsescheibe (4) sowie Gebläseschaufeln (6) umfasst, welche an der genannten Scheibe angebracht sind, mit der sie um eine Drehachse (2) des Gebläses drehen, wobei dieses Gebläse einen ringförmigen Ausgleichskranz (34) umfasst, der mit der Gebläsescheibe (4) in Drehbewegung um die genannte Drehachse (2) gekoppelt ist und mit einer Mehrzahl von Masse-Befestigungsbohrungen (24) ausgestattet ist, die am Umfang in Abstand zueinander angeordnet sind, wobei dieses Gebläse ferner eine oder mehrere Ausgleichsmassen (26) umfasst, die fest an dem genannten ringförmigen Ausgleichskranz (34) angebracht sind, und zwar mittels einer oder mehrerer der genannten Masse-Befestigungsbohrungen (24), wobei dieser ringförmige Ausgleichskranz (34) im Inneren des genannten Eintrittskonus (20) angeordnet ist, so dass seine Masse-Befestigungsbohrungen (24) von der genannten Strömungsbahn (22) des Turbotriebwerks getrennt sind,
**dadurch gekennzeichnet,**
**dass** es außerdem einen Ring zum Blockieren der Gebläseschaufeln (16) aufweist, der es ermöglicht, diese Schaufeln (6) in axialer Richtung gegenüber der genannten Gebläsescheibe (4) zu blockieren, wobei dieser Blockierring (16) und der genannte ringförmige Ausgleichskranz (34) in einem Stück hergestellt sind.

2. Gebläse nach Anspruch 1,
**dadurch gekennzeichnet,**
**dass** im Betrieb mindestens eine der genannten Masse-Befestigungsbohrungen (24) frei gelassen ist.

3. Gebläse nach Anspruch 1 oder Anspruch 2,
**dadurch gekennzeichnet,**
**dass** der genannte ringförmige Ausgleichskranz (34) fest an der genannten Gebläsescheibe (4) angebaut ist.

4. Gebläse nach einem der vorherigen Ansprüche,
**dadurch gekennzeichnet,**
**dass** der Eintrittskonus (20) sich nach hinten bis zu den genannten Gebläseschaufeln (6) erstreckt.

5. Turbotriebwerk für Flugzeuge, das ein Gebläse (1) nach einem der vorherigen Ansprüche aufweist.

6. Turbotriebwerk für Flugzeuge nach Anspruch 5,
**dadurch gekennzeichnet,**
**dass** es ein Turboluftstrahltriebwerk ist.

## Claims

1. An aircraft turbomachine fan (1) comprising a turbomachine inlet cone (20) that has an exterior surface (19) intended to be closely followed by a flow section (12) of the turbomachine, a fan disk (4) and fan blades (6) which are mounted on said disk with which they rotate about an axis of rotation (2) of the fan, said fan comprising an annular balancing flange (34) that rotates as one with the fan disk (4) about said axis of rotation (2) and is equipped with a plurality of weight-fixing holes (24) spaced circumferentially apart, said fan also comprising one or more balancing weights (26) mounted fixedly on said annular balancing flange (34) by means of one or several of said weight-fixing holes (24), said annular balancing flange (34) being positioned inside said inlet cone (20) in such a way that its weight-fixing holes are isolated from said flow section (22)of the turbomachine,
which fan further comprises a fan blade retaining ring (16) for axially retaining these blades (6) with respect to said fan disk (4), said retaining ring (16) and said annular balancing flange (34) being produced as a single piece.

2. The fan as claimed in claim 1, wherein, in operation, at least one of said weight-fixing holes (24) is left clear.

3. The fan as claimed in claim 1 or claim 2, wherein said annular balancing flange (34) is fixedly attached to said fan disk (4).

4. The fan as claimed in any one of the preceding claims, wherein said inlet cone (20) extends in the downstream direction as far as said fan blades (6).

5. An aircraft turbomachine comprising a fan (1) as claimed in any one of the preceding claims.

6. The aircraft turbomachine as claimed in claim 5 and which is a turbojet engine.
